# EUROPÄISCHE PATENTSCHRIFT

(11) **EP 1 250 245 B1**
(45) Veröffentlichungstag und Bekanntmachung des Hinweises auf die Patenterteilung: **31.03.2004**
(21) Anmeldenummer: 00983298.1
(22) Anmeldetag: 12.12.2000
(51) Int. Cl.: B60N 2/56

(54) **Sitz mit einer klimatisierbaren Polsteranordnung, insbesondere Kraftfahrzeugsitz**
Seat, especially vehicle seat, with climatized upholsterysystem
Siège, notamment siège de véhicule motorisé, pourvu avec un dispositf rembourré climatisable

(30) Priorität: 14.01.2000 DE 10001314
(43) Veröffentlichungstag der Anmeldung: 23.10.2002
(73) Patentinhaber: Volkswagen AG, 38436 Wolfsburg (DE)
(72) Erfinder: MICHNIACKI, Matthias, 38440 Wolfsburg (DE); STAHL, Arne, 38518 Gifhorn (DE)
(86) Internationale Anmeldenummer: PCT/EP2000/012608
(87) Internationale Veröffentlichungsnummer: WO 2001/051308

(56) Entgegenhaltungen:
- EP-A- 0 206 151
- EP-A- 0 586 031
- FR-A- 2 599 683
- US-A- 5 613 729
- US-A- 5 692 952
- PATENT ABSTRACTS OF JAPAN vol. 1997, no. 07, 31. Juli 1997 (1997-07-31) & JP 09 071121 A (AICHI MACH IND CO LTD), 18. März 1997 (1997-03-18)

## Beschreibung

Die Erfindung betrifft einen Sitz mit einer klimatisierbaren Polsteranordnung gemäß dem Oberbegriff des Patentanspruchs 1.

Polsteranordnungen mit Klimatisierungsfunktion sind aus einer umfangreichen Patentliteratur bekannt. In diesem Zusammenhang sei nur die DE 196 34 370 A1, die DE 197 03 516 C1, die DE 198 04 100 C1, die DE 198 05 174 C1, DE 197 37 636 A1 und die FR 2 599 683 genannt, in denen die Klimatisierung des Polsters durch Temperaturbeeinflussung oder durch Feuchtigkeitsabfuhr erfolgt.

Betrachtet man nun den bevorzugten Einsatzfall der Erfindung, nämlich als Polsteranordnung eines Kraftfahrzeug-Sitzes, ohne dass dadurch eine Beschränkung der Einsatzmöglichkeiten der Erfindung ausgesprochen sein soll, so enthält die Luft in einem Fahrzeuginnenraum eine Vielzahl von unerwünschten Beimengungen. In erster Linie sind dabei Staubpartikel zu nennen, beispielsweise in Gestalt von angesammeltem oder angesaugtem Staub, aber auch von Rauchpartikeln, sofern in dem Raum geraucht wird. Andere Luftverunreinigungen wirken sich hinsichtlich des Geruchs nachteilig aus.

Insbesondere mechanische Verunreinigungen der Luft oder beim Rauchen freiwerdende teerartige Substanzen können in unerwünschter Weise zu einer Verschmutzung des Polsters führen, durch das die Luft ja in der Regel zwangsgeführt wird, nämlich unter Einsatz von Ventilatoren oder Lüftern.

Die EP 0 586 031 A1 beschreibt eine Sitzauflage nach Art eines Schonbezuges insbesondere als Nachrüstteil für Fahrzeuge. Diese Sitzauflage liegt auf dem Sitz und wird durch Bänder am bzw. auf dem Sitz gehalten. Die durch Luftaustrittslöcher in der Sitzauflage eingeblasene Luft soll kondensierende Luftfeuchtigkeit aufnehmen und abführen. Da diese bekannte Anordnung jedoch als Nachrüstteil konzipiert ist, besitzt sie auch einige Nachteile gegenüber einer fest im Sitz installierten kompakten Einheit einer Sitzklimatisierung, wie z.B. das Verrutschen der Auflage, Faltenbildung, automatische Sitzerhöhung auch bei großen Personen und Beeinflussung der Sitzposition allgemein.

Die EP 0 206 151 sieht eine Sitz anlage vor, bei der entweder wie bei der vorgenannten EP 0 586 031 die Komponenten der Klimatisierung als Auflageteil oder davon abweichend als Integralteil ausgeführt sind. Die für die Luftzufuhr vorgesehenen Antriebe und Filter sind sitzextem im Fahrgastinnenraum angeordnet.

Aus der nachveröffentlichten EP 1 088 696 A2 ist ein Fahrzeugsitz ersichtlich, bei dem in einem hinteren unteren Teil eine Klimabox vorgesehen ist, in der als Integralteil Luftschächte, Wärmetauscher und Luftfilter zusammengefasst sind. Die Zuordnung der Lufttemperierung mittels Wärmetauschers zu dieser Klimabox führt zu einem erhöhten Platzbedarf innerhalb des Sitzes.

Der Erfindung liegt die Aufgabe zugrunde, für gattungsgemäße Sitze mit einer klimatisierbaren Polsteranordnung die Vermeidung nachteiliger Beeinflussungen durch Luftverschmutzung mit minimalem zusätzlichen Aufwand zu verbessern.

Die erfindungsgemäße Lösung dieser Aufgabe besteht in den Merkmalen des Hauptanspruchs, vorteilhafte Ausbildungen der Erfindung beschreiben die Unteransprüche.

Mit dem erfindungsgemäßen Sitz wird nicht nur eine Beeinträchtigung des Polsters durch luftverschmutzende Bestandteile der das Polster durchsetzenden Luft verhindert, sondern die Polsteranordnung zusätzlich zur Lösung ihrer eigentlichen Aufgabe als Bestandteil einer Sitzanordnung auch als Einrichtung zur Luftreinigung beispielsweise im Fahrzeuginnenraum herangezogen.

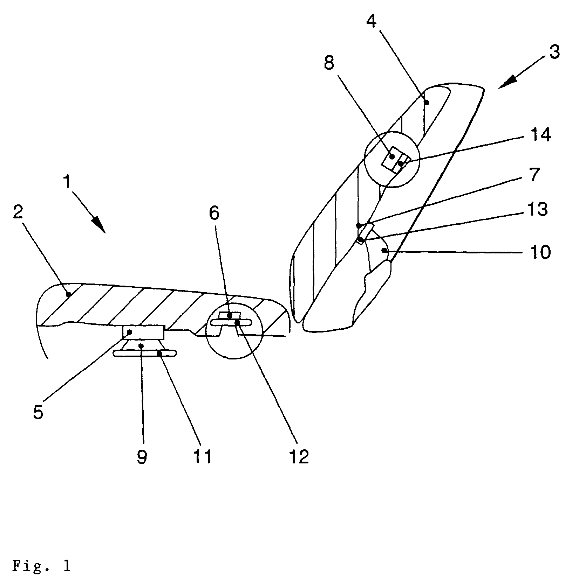

Ein Ausführungsbeispiel der Erfindung für den bevorzugten Einsatzfall wird im folgenden anhand der Zeichnung erläutert, die die Polsteranordnung eines Kraftfahrzeugsitzes in einem Längsschnitt (bezogen auf die Richtungen im Fahrzeug) in seinen hier interessierenden Bestandteilen wiedergibt. Auf die üblichen versteifenden Rahmen und die Einrichtungen zum Abstützen des Sitzes auf dem Fahrzeugboden ist bei der Darstellung verzichtet.

Der Fahrzeugsitz enthält den eigentlichen Sitz 1 mit dem Sitzpolster 2 und die Rückenlehne 3 mit dem Lehnenpolster 4; diese beiden Sitzbestandteile 1 und 3 sind in nicht dargestellter, da üblicher Weise gelenkig verbunden.

In die Polster 2 und 4 sind nicht dargestellte Luftkanäle integriert; diese Kanäle können durch Ausnehmungen in den Polstern 2 und 4 oder aber durch Einformung konkreter Kanäle in diese gewonnen sein. In jedem Fall ist das Polster 2 bzw. 4 so gewählt, dass eine Luftdurchströmung unter der Wirkung von Lüftern 5, 6, 7 und 8 in von der Konstruktion des Sitzes im einzelnen erforderlicher Anzahl erfolgt. Diese Luft kann, wie der eingangs genannte Stand der Technik zeigt, mittels Heizeinrichtungen temperiert oder durch chemische Zusätze wasseraufnehmend gemacht sein. Alle diese Eigenschaften werden unter dem Begriff "Klimatisierung" verstanden. Den Lüftern 5 und 7 sind Ansaugkanäle 9 und 10 vorgeschaltet. Sie können ansaugseitig zu Bespannungen an der Unterseite des Sitzes 1 bzw. der Rückseite der Rückenlehne 3 geführt sein.

Um die den Polstern 2 und 3 zuzuführende Luft von Verunreingungen zu befreien, sind den Lüftern 5 bis 8 Filterelemente 11, 12, 13 und 14 vorgeschaltet. Zweckmäßigerweise sind an den Lüftern Aufnahmen für die Filterelemente vorgesehen, die etwa rahmenartig ausgebildet sind und das Auswechseln der Filterelemente durch Aus- und Einschieben derselben von Hand zulassen. Dadurch kann eine dauernde "Sättigung" der Filterelemente mit Verschmutzungsstoffen vermieden werden.

Als Filtermaterialien kann, wie an sich bekannt, gegen mechanische Verschmutzung der Luft ein Vliesmaterial eingesetzt werden; gegen Geruchsbelästigung wird man ein Filtermaterial nach Art von Aktivkohlefilter einsetzen.

Mit der Erfindung ist also mit minimalem zusätzlichen Aufwand und praktisch ohne zusätzlichen Platzbedarf eine wirksame Lösung der gestellten Aufgabe geschaffen, die beispielsweise ein Sitzpolster zugleich als Luftreinigungsvorrichtung zu verwenden gestattet.

## Patentansprüche

1. Sitz mit einer klimatisierbaren Polsteranordnung, insbesondere für ein Kraftfahrzeug, mit im Polster (2, 3) vorgesehenen Luftkanälen, in deren Zuge zumindest ein Lüfter (5, 6, 7, 8) mit einem Filter (11, 12, 13, 14) zur Reinigung der Luft angeordnet ist, **dadurch gekennzeichnet, dass** das Filter (11, 12, 13, 14) innerhalb der Polsteranordnung lufteintrittsseitig an einer etwa rahmenartig ausgebildeten Aufnahme des Lüfters (5, 6, 7, 8) angeordnet ist.

2. Anordnung nach Anspruch 1, **gekennzeichnet durch** ein gegen mechanische Luftverschmutzung wirksames Filter (11, 12, 13, 14).

3. Anordnung nach einem der Ansprüche 1 oder 2, **gekennzeichnet durch** ein hinsichtlich störender Geruchsstoffe in der Luft chemisch wirksames Filter (11, 12, 13, 14).

4. Anordnung nach einem der Ansprüche 1 bis 3, **gekennzeichnet durch** eine auswechselbare Unterbringung des Filters (11, 12, 13, 14).

## Claims

1. Seat with an air-conditionable upholstery arrangement, in particular for a motor vehicle, with air ducts which are provided in the upholstery (2, 3) and along which is arranged at least one fan (5, 6, 7, 8) with a filter (11, 12, 13, 14) for purifying the air, **characterized in that** the filter (11, 12, 13, 14) is arranged within the upholstery arrangement, on the air-inlet side, on an approximately frame-like receptacle of the fan (5, 6, 7, 8).

2. Arrangement according to Claim 1, **characterized by** a filter (11, 12, 13, 14) effective against mechanical air contamination.

3. Arrangement according to one of Claims 1 or 2, **characterized by** a filter (11, 12, 13, 14) active chemically in terms of disturbing odorous substances in the air.

4. Arrangement according to one of Claims 1 to 3, **characterized by** an exchangeable accommodation of the filter (11, 12, 13, 14).

## Revendications

1. Siège avec dispositif rembourré climatisable, notamment pour un véhicule automobile, avec des conduits d'air qui sont prévus dans le rembourrage (2, 3) et dans le cours desquels est placé au moins un aérateur (5, 6, 7, 8) avec un filtré (11, 12, 13, 14) pour l'épuration de l'air, **caractérisé en ce que** le filtre (11, 12, 13, 14) est placé à l'intérieur du dispositif rembourré, du côté de l'entrée d'air, sur un logement, conçu sensiblement en forme de cadre, de l'aérateur (5, 6, 7, 8).

2. Dispositif selon la revendication 1, **caractérisé par** un filtre (11, 12, 13, 14) efficace contre une pollution mécanique de l'air.

3. Dispositif selon l'une des revendications 1 ou 2, **caractérisé par** un filtre (11, 12, 13, 14) efficace chimiquement contre des substances odorantes gênantes dans l'air.

4. Dispositif selon l'une des revendications 1 à 3, **caractérisé par** un logement échangeable du filtre (11, 12, 13, 14).
